# EUROPEAN PATENT SPECIFICATION

(11) **EP 2 792 510 B1**
(45) Date of publication and mention of the grant of the patent: **10.08.2016**
(21) Application number: 13163934.6
(22) Date of filing: 16.04.2013
(51) Int. Cl.: B60C 23/04

(54) **Tire status receiving system**
Reifenszustand-Empfangssystem
Système de réception de l'état d'un pneu

(43) Date of publication of application: 22.10.2014
(73) Proprietor: CUB Elecparts Inc., Changhua County (TW)
(72) Inventor: Yu, Yu-Tao, Changhua County (TW); Wang, Tsan-Nung, Changhua County (TW); Hu, Chao-Ching, Tainan City (TW); Ko, Tzu-Wen, Changhua County (TW); Chi, Ya-Ling, Taichung City (TW); Chen, Chi-Hung, Changhua County (TW)
(74) Representative: Becker Kurig Straus

(56) References cited:
- EP-A2- 1 172 237
- US-A1- 2005 099 274
- US-A1- 2005 132 792
- US-A1- 2007 244 607
- US-A1- 2012 139 751
- US-B1- 6 169 480

## Description

### BACKGROUND OF THE INVENTION

### 1. Field of the Invention

The present invention relates to tire status monitoring technology and more particularly, to a tire status receiving system, which is a plug-and-play system that is applicable to any car without permanent installation.

### 2. Description of the Related Art

A tire status monitoring system is disclosed in US 20050099274.

For driving safety considerations, many cars have a tire status sensor installed in each tire thereof to provide real-time tire status data to a receiver unit in the respective car for display on a linked display screen, enabling the car driver to know the status of each tire on the real time. However, the application of this kind of tire status monitoring system has limitations. Normally, the receiver unit and the display device of a tire status monitoring system are mounted and fixed inside the car. For enabling a car without receiver unit to provide a tire status monitoring function, the car must be modified before operation, i.e., a receiver unit and a display screen must be mounted inside the car. This will be a big problem for general users. Therefore, it is desirable to provide a simple tire status monitoring system.

### SUMMARY OF THE INVENTION

The present invention has been accomplished under the circumstances in view. It is the main object of the present invention to provide a tire status receiving system, which has plug-and-play characteristics and is applicable to any car without the need to modify the body of the car.

To achieve this and other objects of the present invention, a tire status monitoring system comprises a first signal converter module and a second signal converter module. The first signal converter module comprises a first microcontroller unit adapted for converting a modulation code signal into a code for information interchange, a wireless receiver unit electrically coupled to the first microcontroller unit and adapted for receiving a modulation code signal from a tire status sensor and transmitting the modulation code signal to the first microcontroller unit for enabling the modulation code signal to be converted by the first microcontroller unit into a code for information interchange, and an output unit electrically coupled to the first microcontroller unit and controllable by the first microcontroller unit to output each code for information interchange converted by the first microcontroller unit. The second signal converter module comprises a second microcontroller unit adapted for matching the content of a code for information interchange with predetermined tire alarm threshold values and checking a linking status of the second signal converter module, a memory unit electrically coupled to the second microcontroller unit for storing tire status sensor ID codes and tire alarm threshold values, an interface unit electrically coupled to the second microcontroller unit for communication with the output unit of the first signal converter module to receive each data signal outputted by the output unit, a power supply unit electrically coupled to the second microcontroller unit to provide electricity to the second signal converter module for working, and a communication port electrically coupled to the second microcontroller unit and having installed therein a signal transmission circuit and a charging circuit.

Other advantages and features of the present invention will be fully understood by reference to the following specification in conjunction with the accompanying drawings, in which like reference signs denote like components of structure.

### BRIEF DESCRIPTION OF THE DRAWINGS

FIG. 1 is a block diagram of a first signal converter module and a second signal converter module of a tire status monitoring system in accordance with the present invention.
FIG. 2 is a block diagram of an alternate form of the first signal converter module in accordance with the present invention.
FIG 3 is an operational flow chart of the present invention.

### DETAILED DESCRIPTION OF THE INVENTION

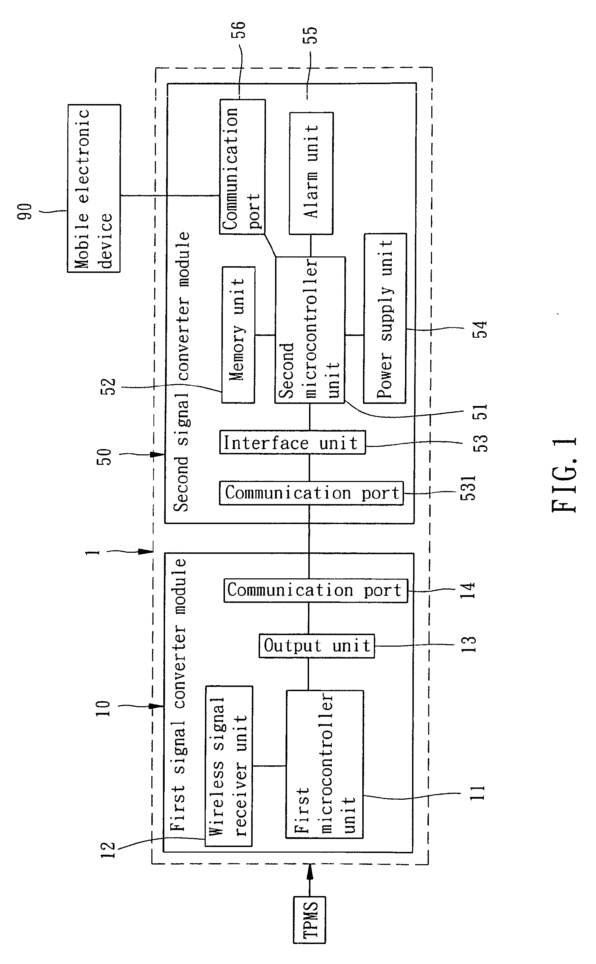

Referring to FIG. 1, a tire status receiving system in accordance with the present invention is shown. The tire status receiving system **1** comprises a first signal converter module **10**, a second signal converter module **50**, and a mobile electronic device **90**. The mobile electronic device **90** is equipped with a display screen.

The first signal converter module **10** comprises a first microcontroller unit **11**, a wireless signal receiver unit **12** electrically coupled to the first microcontroller unit **11** and adapted for transmitting a modulated signal received from a tire status sensor to the first microcontroller unit **11**, and an output unit **13** electrically coupled to the first microcontroller unit **11**. The first microcontroller unit **11** is adapted to convert the modulation code of the modulated signal provided by the wireless receiver unit **12** into a code for information interchange and then to output the signal through the output unit **13**. The output unit **13** can be configured to output the signal wirelessly. Alternatively, the output unit **13** can be configured to provide a communication port **14** for signal output through a cable. For example, the modulated signal received by the wireless signal receiver unit **12** can be an amplitude-shift keying signal or frequency-shift keying signal that is converted by the first microcontroller unit **11** into an ASCII (American Standard Code for Information Interchange) signal for output.

The second signal converter module **50** comprises a second microcontroller unit **51**, a memory unit **52**, an interface unit **53**, a power supply unit **54**, an alarm unit **55**, and a communication port **56**. The second microcontroller unit **51** is adapted for matching the content of a code for information interchange with predetermined tire alarm threshold values and checking a linking status of the second signal converter module **50**. The memory unit **52** is electrically coupled with the second microcontroller unit **51** for storing TPMS (Tire Pressure Monitoring System) ID codes and alarm threshold values. The interface unit **53** is electrically connected to the second microcontroller unit **51** for communication with the output unit **13** of the first signal converter module **10** to receive data outputted by the output unit **13**. The interface unit **53** is configured to fit the output unit **13** of the first signal converter module **10**. If the output unit **13** is configured to output signals in a wireless manner, the interface unit **53** should be configured in the form of a wireless signal receiver for receiving wireless signals transmitted by the output unit **53**. On the contrary, if the output unit **13** is configured to output signals in a wired manner, the interface unit **53** should be electrically connected to the communication port of the output unit **13** for receiving signals from the output unit **13**. The power supply unit **54** is electrically connected to the second microcontroller unit **51** to provide t electricity to the second signal converter module **50** for working. Further, the first signal converter module **10** and the second signal converter module **50** can be respectively equipped with one respective power supply unit. Alternatively, the first signal converter module **10** and the second signal converter module **50** can share a common power supply unit. Further, the power supply unit **54** can be a battery, or an external power source, for example, the car battery power supply. The alarm unit **55** is electrically coupled to the second microcontroller unit **51**, and controllable by the second microcontroller unit **51** to give off a warning signal. Further, the alarm unit **55** can be an alarm signal light or audio alarm. The communication port **56** is electrically coupled to the second microcontroller unit **51**, having installed therein a signal transmission circuit and a charging circuit.

The mobile electronic device **90** is electrically connected to the communication port **56** of the second signal converter module **50** by a cable. In this embodiment, the communication port **56** is a USB port. Further, the mobile electronic device **90** can be a PDA, smart phone, iPad, or any other tablet computer.

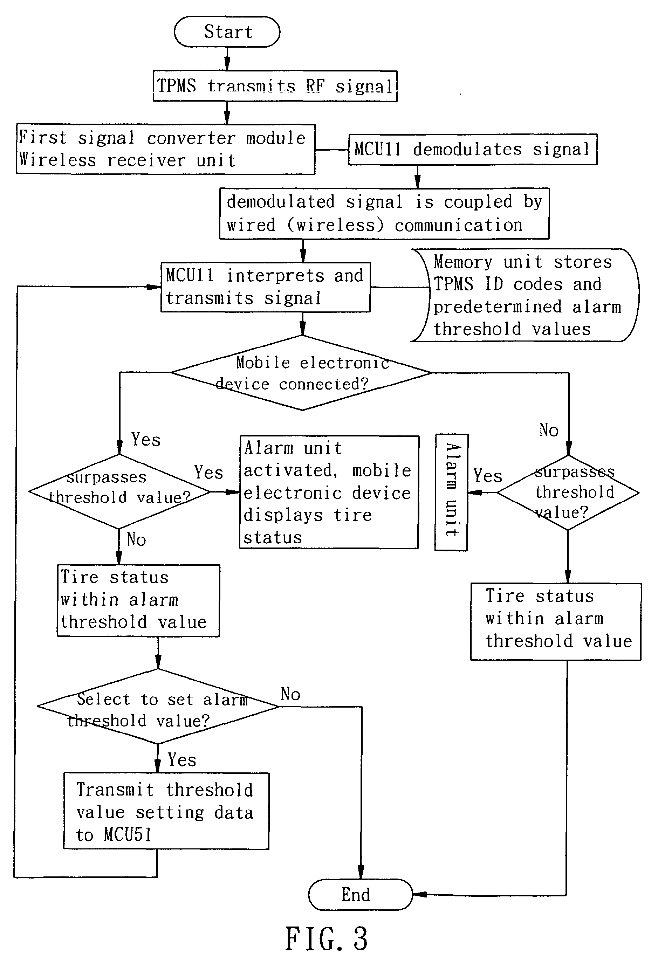

As illustrated in FIG. 3, the tire status receiving system can use the car battery power supply directly. When the TPMS (Tire Pressure Monitoring System) transmits a modulated signal containing the measured data, such as pressure, temperature, acceleration and/or battery level in a wireless manner, the wireless receiver unit **12** of the first signal converter module **10** can receive this modulated signal and send it to the first microcontroller unit **11**, enabling this modulated signal to be converted into a code for information interchange by the first microcontroller unit **11** and then outputted through the output unit **13**. The output unit **13** can be a physical communication port, or a wireless signal transmitter. The signal outputted by the output unit **13** can then be received by the interface unit **53** of the second signal converter module **50**, and then provided to the second microcontroller unit **51**. Upon receive of the signal from the interface unit **53**, the second microcontroller unit **51** interprets the format and content of the signal, assuring data accuracy and integrity. At this time, the second microcontroller unit **51** matches the received data with a predetermined TPMS (Tire Pressure Monitoring System) ID code and alarm threshold value stored in the memory unit **52**, and checks the connection status between the second signal converter module **50** and the mobile electronic device **90**.

If the second signal converter module **50** is not in connection with the mobile electronic device **90** and the tire status is within the safety range, the second microcontroller unit **51** takes no action. However, if the tire status surpasses the alarm threshold value at this time, the second microcontroller unit **51** provides a signal to the alarm unit **55**, driving the alarm unit **55** to give off an alarm signal, for example, to give off a flashing light or warning sound, reminding the user that the tires are likely to have safety problems.

If the second signal converter module **50** is in connection with the mobile electronic device **90** and the tire status is within the safety range, the current tire status data is displayed on the display screen of the mobile electronic device **90**. However, if the tire status surpasses the alarm threshold value at this time, the second microcontroller unit **51** drives the alarm unit **55** to give off an alarm signal and enables the display screen of the mobile electronic device **90** to display the current tire status data, reminding the user that the tires are likely to have safety problems.

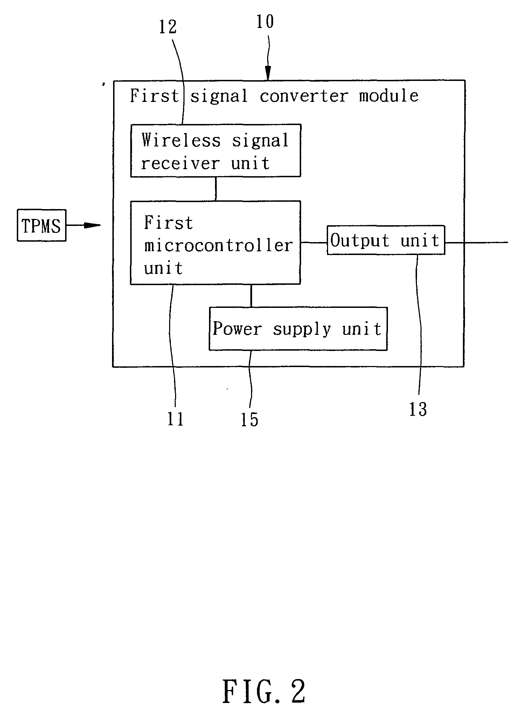

Further, the first signal converter module **10** can be used independently. In a second embodiment of the present invention, as shown in FIG 2, the first signal converter module **10** comprises a first microcontroller unit **11**, a wireless signal receiver unit **12** electrically coupled to the first microcontroller unit **11** and adapted for transmitting a modulated signal received from a tire status sensor to the first microcontroller unit **11**, an output unit **13** electrically coupled to the first microcontroller unit **11**, and a power supply unit **15** electrically coupled to the first microcontroller unit **11** for providing electricity to the first signal converter module **10** for working. The first microcontroller unit **11** is adapted to convert the modulation code of the modulated signal provided by the wireless receiver unit **12** into a code for information interchange and then to output the signal through the output unit **13**. The output unit **13** can be configured to output the signal wirelessly. Alternatively, the output unit **13** can be configured to provide a communication port **14** for signal output through a cable. For example, the modulated signal received by the wireless signal receiver unit **12** can be an amplitude-shift keying signal or frequency-shift keying signal that is converted by the first microcontroller unit **11** into an ASCII (American Standard Code for Information Interchange) signal for output.

Thus, the first signal converter module **10** can convert the modulation code signal transmitted by the wire pressure sensor into a code for information interchange and then outputs the code for information interchange. Further, the user using the present invention can use the mobile electronic device to alter the tire status alarm threshold values. These tire status alarm threshold values can be stored in the memory unit for matching.

The tire status receiving system can be used in any car. After installation of a TPMS in the tires of the car, the tire status receiving system of the present invention can be used with a smart phone, PDA, tablet computer, or any of a variety of other mobile electronic devices in the car for monitoring the status of the tires, greatly saving the installation cost and effectively increasing driving safety. Further, the charging design of the communication port of the second signal converter module is capable of charging the battery of the smart phone, PDA, tablet computer, or any other mobile electronic device in use, extending the operating time of the mobile electronic device and overcoming the problem of high power consumption of the mobile electronic device.

Although particular embodiments of the invention have been described in detail for purposes of illustration, various modifications and enhancements may be made without departing from the scope of the invention. Accordingly, the invention is not to be limited except as by the appended claims.

## Claims

1. A tire status receiving system, comprising:
a first signal converter module (10) comprising:
a first microcontroller unit (11) adapted for converting a modulation code signal into a code for information interchange;
a wireless receiver unit (12) electrically coupled to said first microcontroller unit (11) and adapted for receiving a modulation code signal from a tire status sensor and transmitting the modulation code signal to said first microcontroller unit (11) for enabling the modulation code signal to be converted by said first microcontroller unit (11) into a code for information interchange; and
an output unit (13) electrically coupled to said first microcontroller unit (11) and controllable by said first microcontroller unit (11) to output each code for information interchange converted by said first microcontroller unit (11); and
a second signal converter module (50) comprising:
a second microcontroller unit (51) adapted for matching the content of a code for information interchange with predetermined tire alarm threshold values and checking a linking status of said second signal converter module (50);
a memory unit (52) electrically coupled to said second microcontroller unit (51) for storing tire pressure sensor ID codes and tire alarm threshold values;
an interface unit (53) electrically coupled to said second microcontroller unit (51) for communication with said output unit (13) of said first signal converter module (10) to receive each data signal outputted by said output unit (13);
a power supply unit (54) electrically coupled to said second microcontroller unit (51) to provide electricity to said second signal converter module (51) for working; and
a communication port (56) electrically coupled to said second microcontroller unit (51), said communication port (56) comprising signal transmission circuit means and charging circuit means.

2. The tire status receiving system as claimed in claim 1, wherein said second signal converter module (50) further comprises an alarm unit (55) electrically coupled to said second microcontroller unit (51), said alarm unit (55) being an alarm signal light.

3. The tire status receiving system as claimed in claim 1, wherein said second signal converter module (50) further comprises an alarm unit (55) electrically coupled to said second microcontroller unit (51), said alarm unit (55) being an audio alarm.

4. The tire status receiving system as claimed in claim 1, wherein said power supply unit (54) is electrically coupled to a car battery power supply.

5. The tire status receiving system as claimed in claim 1, wherein said communication port (56) is a USB port.

6. The tire status receiving system as claimed in claim 1, wherein said communication port (56) is linked with a mobile electronic device comprising a display screen.

7. The tire status receiving system as claimed in claim 1, wherein said output unit (13) of said first signal converter module (10) comprises a communication port; said interface unit (53) of said second signal converter module (50) comprises a communication port electrically coupled to the communication port of said first signal converter module output unit (13).

## Patentansprüche

1. Reifen-Zustands-Empfangssystem, welches umfasst:
ein erstes Signalumwandlungs-Modul (10), welches umfasst:
einen ersten Mikrokontroller (11), der angepasst ist, ein Modulierungscode-Signal in einen Code für Informationsaustausch umzuwandeln;
eine drahtlose Empfangseinheit (12), die elektrisch mit der ersten Microcontroller-Einheit (11) verbunden und angepasst ist, ein Modulationscode-Signal von einem Reifenstatus-Sensor zu empfange und das Modulationscode-Signal an die erste Microcontroller-Einheit (11) zu senden, so dass das Modulationscode-Signal durch die erste Microcontroller-Einheit (11) in einen Code zum Informationsaustausch umgewandelt werden kann; und
eine Ausgabe-Einheit (13), die mit der ersten Microcontroller-Einheit (11) elektrisch verbunden und durch die erste Microcontroller-Einheit (11) steuerbar ist, um jeden Code für einen Informationsaustausch, der von der ersten Microcontroller-Einheit (11) umgewandelt wurde, auszugeben; und
ein zweites Signalumwandlungs-Modul (50) welches umfasst:
eine zweite Microcontroller-Einheit (51), die angepasst ist, den Inhalt eines Codes zum Informationsaustausch mit bestimmten Reifenalarm-Grenzwerten abzugleichen und einen Verknüpfungstatus des zweiten Signalumwandlungs-Moduls (50) zu überprüfen;
eine Speicher-Einheit (52), die mit der zweiten Microcontroller-Einheit (51) elektrisch verbunden ist, um die Reifendruck-Sensor ID Codes und die Reifenalarm-Grenzwerte zu speichern;
eine Schnittstellen-Einheit (53), die mit der zweiten Microcontroller-Einheit (51) elektrisch verbunden ist, um mit der Ausgabe-Einheit (13) des ersten Signalumwandlungs-Moduls (10) zu kommunizieren, um jedes von der Ausgabe-Einheit (13) ausgegebene Daten-Signal zu empfangen;
eine Stromversorgungs-Einheit (54), die mit der zweiten Microcontroller-Einheit (51) elektrisch verbunden ist, um zu dem zweiten Signalumwandlungs-Modul (51) Strom für d Betrieb zu liefern; and
einen Kommunikations-Anschluss (56), der mit der zweiten Microcontroller-Einheit (51) elektrisch verbunden ist, worin der Kommunikationsanschluss (56) Signalübertragungs-Schaltkreismittel und Ladungs-Schaltkreismittel umfasst.

2. Reifen-Zustands-Empfangssystem nach Anspruch 1, worin das zweite Signalumwandlungs-Modul (50) weiter eine mit der zweiten Microcontroller-Einlleit (51) elektrisch verbundene Alarm-Einheit (55) umfasst, worin die Alarm-Einheit (55) ein Alarmsignal-Licht ist.

3. Reifen-Zustands-Empfangssystem nach Anspruch 1, worin das zweite Signalumwandlungs-Modul (50) weiter eine mit der zweiten Microcontroller-Einheit (51) elektrisch verbundene Alarm-Einheit (55) umfasst, worin die Alarm-Einheit (55) ein Audio-Alarm ist.

4. Reifen-Zustands-Empfangssystem nach Anspruch 1, worin die Stromliefer-Einheit (54) mit einer Autobatterie-Stromquelle elektrisch verbunden ist.

5. Reifen-Zustands-Empfangssystem nach Anspruch 1, worin der Kommunikations-Anschluss (56) ein USB-Anschluss ist.

6. Reifen-Zustands-Empfangssystem nach Anspruch 1, worin der Kommunikations-Anschluss (56) mit einer mobilen elektronischen Einrichtung verbunden ist, die einen Anzeige-Bildschirm umfasst.

7. Reifen-Zustands-Empfangssystem nach Anspruch 1, worin die Ausgaben-Einheit (13) des ersten Signalumwandlungs-Modul (10) einen Kommunikations-Anschluss umfasst; worin die Schnittstellen-Einheit (53) des zweiten Signalumwandlungs-Moduls (50) einen Kommunikations-Anschluss umfasst, der mit dem Kommunikations-Anschluss der ersten Signalumwandlungs-Modul Ausgaben-Einheit (13) elektrisch verbunden ist.

## Revendications

1. Système de réception de statut de pneu, comprenant :
un premier module convertisseur de signal (10) comprenant :
une première unité de microcontrôleur (11) adaptée pour convertir un signal de code de modulation en un code pour un échange mutuel d'information ;
une unité de récepteur sans fil (12) couplé électriquement à ladite première unité de microcontrôleur (11) et adaptée pour recevoir un signal de code de modulation provenant d'un capteur de statut de pneu et transmettre le signal de code de modulation à ladite première unité de microcontrôleur (11) pour permettre la conversion du signal codé de modulation par ladite première unité de microcontrôleur (11) en un code pour un échange mutuel d'information ; et
une unité de sortie (13) couplée électriquement à ladite première unité de microcontrôleur (11) et pouvant être commandée par ladite première unité de microcontrôleur (11) pour délivrer chaque code pour un échange mutuel d'information convertie par ladite première unité de microcontrôleur (11); et
un second module convertisseur de signal (50) comprenant :
une seconde unité de microcontrôleur (51) adapté pour faire concorder le contenu d'un code pour un échange mutuel d'information avec des valeurs de seuil d'alarme de pneu prédéterminées et vérifier un statut de connexion dudit second module convertisseur de signal (50) ;
une unité de mémoire (52) couplée électriquement a ladite seconde unité de microcontrôleur (51) pour mémoriser des codes d'identification de capteur de pression de pneu et des valeurs de seuil d'alarme de pneu ;
une unité d'interface (53) couplée électriquement à ladite seconde unité de microcontrôleur (51) pour communiquer avec ladite unité de sortie (13) dudit premier module convertisseur de signal (10) pour recevoir chaque signal de données délivré par ladite unité de sortie (13) ;
une unité d'alimentation électrique (54) couplée électriquement à ladite seconde unité de microcontrôleur (51) pour fournir de l'électricité au dit second module convertisseur de signal (5) pour son fonctionnement ; et
un port de communication (56) couplé électriquement à ladite seconde unité de microcontrôleur (51), ledit port de communication (56) comprenant un moyen de circuit de transmission de signal et un moyen de circuit de charge.

2. Système de réception de statut de pneu selon la revendication 1, dans lequel le dit second module convertisseur de signal (50) comprend en outre une unité d'alarme (55) couplée électriquement a ladite seconde unité de microcontrôleur (51), ladite unité d'alarme (51) étant une lumière de signal d'alarme.

3. Système de réception de statut de pneu selon la revendication 1, dans lequel ledit second module convertisseur de signal (50) comprend en outre une unité d'alarme (55) couplée électriquement a ladite seconde unité de microcontrôleur (51), ladite unité d'alarme (55) étant une alarme radio.

4. Système de réception de statut de pneu selon la revendication 1, dans lequel ladite unité d'alimentation électrique (54) est couplée électriquement à une alimentation de batterie de voiture.

5. Système de réception de statut de pneu selon la revendication 1, dans lequel ledit port de communication (56) est un port USB.

6. Système de réception de statut de pneu selon la revendication 1, dans lequel ledit port de communication (56) est relié avec un dispositif électronique mobile comprenant un écran d'affichage.

7. Système de réception de statut de pneu selon la revendication 1, dans lequel ladite unité de sortie (13) dudit premier module convertisseur de signal (10) comprend un port de communication ; ladite unité d'interface (53) dudit second module convertisseur de signal (50) comprend un port de communication couplé électriquement au port de communication de ladite première unité de sortie de module de convertisseur de signal (13).
